# EUROPEAN PATENT APPLICATION

(11) **EP 1 619 813 A2**
(43) Date of publication of application: **25.01.2006**
(21) Application number: 05015680.1
(22) Date of filing: 19.07.2005
(51) Int. Cl.: H04H 9/00

(54) **Technique for making rewards available for an audience tuned to a broadcast**

(30) Priority: 19.07.2004 US 589311 P; 08.07.2005 US 177112 P
(71) Applicant: Weinblatt, Lee S., Teaneck, New Jersey 07666 (US); Langer, Thomas, Teaneck, New Jersey 07666 (US)
(72) Inventor: Weinblatt, Lee S., Teaneck, New Jersey 07666 (US); Langer, Thomas, Teaneck, New Jersey 07666 (US)
(74) Representative: Epping - Hermann - Fischer

(57) **Abstract**

A method for obtaining access supplementary materials related to a program that is broadcast to a plurality of audience members, comprising:
receiving said broadcast output signal,
separating from said received broadcast output signal a programming signal and a supplementary material ID signal, storing said separated supplementary material ID signals received at said location during an interval of time, and
generating a control signal, related to said stored supplementary material ID signals, upon actuation by the audience member at such location; and
printing and/or displaying information related to the stored program-related supplementary material respectively corresponding to said supplementary material ID signals on responding to said received control signal by retrieving stored data from a database.

## Description

This invention is directed to an interactive technique applied while an audience is listening to and/or watching a program broadcast from a programming signal source as it is being performed by reproduction equipment and, more particularly, to interactive broadcasting that enables individual members of that audience to readily and instantly obtain supplementary, program-related materials, such as a discount coupon.

When a program is broadcast, it may be advantageous to provide the audience with the opportunity to obtain something program-related beyond what is contained within the program itself. For example, certain promotional activities may involve additional materials. Also, the information contained in the broadcast may be more limited than the program provider wants to provide and less than the audience member
(referred to hereinafter as a "viewer" or "participant") is interested in obtaining. The "program" can be audio and/or video, commercial (e.g. advertisement) and/or non-commercial (e.g. an entertainment show), and is obtained as a programming signal (e.g. a television signal) from a program signal source (e.g. a television station) originated by a program provider (e.g. an advertiser) . The "broadcast" of the program can be over the airwaves, cable, satellite, or any other signal transmission medium. This term also applies to playback from recording media such as audio tape, video tape, DAT, CD-ROM, and semiconductor memory. An "audience" for such program reproduction is constituted of the persons who perceive the program.

The program is "performed" by any means which result in some form of perception by human beings, the most common being video and audio. The "reproduction equipment" is any and all types of units to convert a broadcast signal into human perceptible form.

The audience can be described as being "tuned" to a program when the signal source is a TV or radio broadcast station. This term may be less commonly applied when the signal source is a tape recorder, for example. However, for the sake of brevity and convenience, the word "tuned" is applied herein to all situations in which an audience member selects a particular program, whether it be by twisting a dial, operating a remote control, or inserting a cassette or disk into a reader for playback.

It can be readily appreciated that TV programs are restricted to a particular length due to the time period allocated to a show, and the high cost charged for broadcasting a commercial advertisement (referred to herein interchangeably as "commercial" or "advertisement") based on its duration. Many illustrations can be given which show the need to provide materials to supplement the show and/or advertisement. For example, consumers may seek detailed information about an advertised product. A news program could provide viewers with historical information about a person or place currently in the news. Government institutions could provide application forms related to announcements for public services. A retailer could make available an incentive reward, such as discount coupons, to purchase its products. Other rewards could also be available, such as free theater tickets for viewers who qualify by participating in a survey or by watching specific programs. All such broadcast program-related materials, in tangible and intangible form, be they information, rewards or anything else, are collectively referred to herein as "supplementary materials ". However, for reasons of brevity and convenience, the ensuing discussion related to the present invention will refer only to incentive rewards, or reward coupons, or just "rewards," for short.

It is well known by TV advertisers, for example, that the experience of viewing an advertised product creates an immediate desire in the viewer to purchase that product. This desire has an initially high level of interest during and shortly after the broadcast, but decreases sharply during a falloff period in the hours that follow. However, if the viewer receives an instant reward while the level of interest is still high, in the form of a reward coupon for example, an incentive is established for the viewer to retain a high level of interest to purchase the product, or at least higher than it would be otherwise, well beyond the falloff period. Also, the prospect of receiving an instant reward can convert an attitude of annoyance at having a TV show interrupted by an unwanted commercial into an attitude of at least tolerance and perhaps even into an incentive for being attentive to the commercial.

Viewers have been provided during broadcasts with telephone numbers and/or website addresses for obtaining the rewards offered by advertisers. However, the need to memorize or write down the telephone numbers and/or URLs is an inconvenience as well as a source for error. Consequently, prior art techniques have been developed for providing interactive access to such rewards. The word "interactive" as utilized herein denotes an activity that takes place during the course of a broadcast. The aim of such interactive access is to enable and facilitate access to the rewards without having to write down or memorize anything. Access should be gained with only a simple manual intervention by the viewer.

Several techniques for interactive access to web sites on the Internet are known. However, such techniques have various shortcomings. For example, they require the viewer to tediously navigate through a website in order to reach the web page that pertains to the available rewards. Viewers occasionally get sidetracked by other features available on the website. Also, such techniques require the PC to be placed near the TV and to have the PC constantly on-line, thus monopolizing a telephone line.

### SUMMARY OF THE INVENTION

One object of the present invention is to provide an improved technique available for an audience tuned to a broadcast for obtaining supplementary, program-related outputs, such as rewards.

Another object of the present invention is to provide an effective interactive technique for obtaining such program-related rewards instantly.

A further object of the present invention is to provide a technique for obtaining such program-related rewards instantly which is simple and convenient to use by the viewer.

Yet another object of the present invention is to facilitate changing specifics of the rewards being offered without having to change the broadcast signal.

One other object of the present invention is to facilitate the targeted delivery of rewards to particular viewers.

These and other objects are attained in accordance with one aspect of the present invention directed to a technique for enabling access to supplementary materials related to a program that is broadcast to a plurality of audience members. A programming signal is obtained to be used for performing the program. A supplementary material ID signal is obtained that uniquely identifies particular program-related supplementary material from among a plurality of available program-related supplementary materials, but which does not include sufficient data for printing and/or displaying such particular program-related supplementary material. The programming signal and the supplementary material ID signal are combined into an output signal that is broadcast from a broadcast signal source. At a location of each audience member, the broadcast output signal is received, the programming signal and the supplementary material ID signal are separated from the received broadcast output signal, the program is performed with the separated programming signal on reproduction equipment, the separated supplementary material ID signals received at the location during an interval of time are stored, and a control signal is generated, related to the stored supplementary material ID signals, upon actuation by the audience member at such location. At a location remote from each of the audience members, a database is provided that stores data for printing and/or displaying information related to the plurality of available program-related supplementary materials, the control signal is received and, in response thereto, stored data is retrieved from the database for printing and/or displaying information related to the stored program-related supplementary material respectively corresponding to the supplementary material ID signals, and the retrieved data is transmitted to the location from which the control signal was sent.

Another aspect of the present invention is directed to a technique to generate a broadcast signal for enabling access to supplementary materials related to a program that is broadcast to a plurality of audience members. The technique comprises: obtaining a programming signal to be used for performing the program; obtaining a supplementary material ID signal that uniquely identifies particular program-related supplementary material from among a plurality of available program-related supplementary materials, but which does not include sufficient data for printing and/or displaying such particular program-related supplementary material; combining the programming signal and the supplementary material ID signal into a broadcast signal; and broadcasting the broadcast signal from a broadcast signal source.

Another aspect of the present invention is directed to a technique to use a broadcast signal for enabling access to supplementary materials related to a program that is broadcast from a program signal source to a plurality of audience members, wherein the broadcast signal is a combination of (i) a programming signal to be used for performing the program, and (ii) a supplementary material ID signal that uniquely identifies particular program-related supplementary material from among a plurality of available program-related supplementary materials, but which does not include sufficient data for printing and/or displaying such particular program-related supplementary material. The technique comprises: at a location of each audience member, receiving the broadcast output signal, separating from the received broadcast output signal the programming signal and the supplementary material ID signal, performing the program with the separated programming signal on reproduction equipment, storing the separated supplementary material ID signals received at the location during an interval of time, and generating a control signal, related to the stored supplementary material ID signals, upon actuation by the audience member at such location; and at a location remote from each of the audience members, providing a database that stores data for printing and/or displaying information related to the plurality of available program-related supplementary materials, receiving the control signal, responding to the received control signal by retrieving from the database stored data for printing and/or displaying information related to the stored program-related supplementary material respectively corresponding to the stored supplementary material ID signals, and transmitting the retrieved data to the location from which the control signal was sent.

Another aspect of the present invention is directed to a technique for enabling access to supplementary materials related to a broadcast signal that is broadcast from a signal source to a plurality of audience members at respective locations, wherein the broadcast signal is a combination of (i) a programming signal to be used for performing a program, and (ii) a supplementary material ID signal that uniquely identifies particular program-related supplementary material from among a plurality of available program-related supplementary materials, but which does not include sufficient data for printing and/or displaying such particular program-related supplementary material. The technique comprises: providing a database that stores data for printing and/or displaying information related to a plurality of program-related supplementary materials such that the materials are respectively associated with unique supplementary material ID signals; receiving a control signal actuated by one of the audience members, the control signal being related to supplementary material ID signals detected at the location during an interval of time; responding to the received control signal by retrieving from the database stored data for printing and/or displaying the information related to the stored program-related supplementary material respectively corresponding to the detected supplementary material ID signals, and transmitting the retrieved data to the location from which the control signal was sent.
Fig. 1 is a schematic block diagram of the invention;
Fig. 2 is a flow chart showing operations performed by the viewer's personal computer (PC);
Fig. 3 is a flow chart showing the operations performed by the website service center.

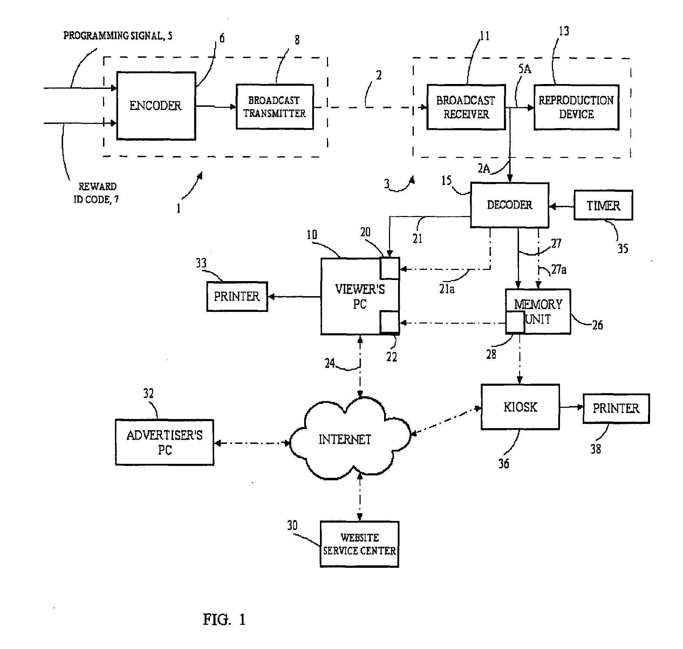

The present invention relies on the following components. As shown in Fig. 1, a programming signal source 1, such as a television ("TV") broadcast station, generates an output signal 2 which is a combination of a programming signal 5 and a reward ID code 7. Signal 2 is received by program reproduction apparatus 3 which can be capable of suitably reproducing the programming signal for video and/or audio performance.

The present invention is valuable, for example, to an advertiser who is offering a discount coupon applicable toward purchase of the product being advertised in a commercial. Turning now to a more detailed explanation of the present invention, a reward ID code is provided along with the programming signal in order to enable instantly printing a reward coupon from the program to which the viewer is tuned. The word "instantly" as used herein applies to a time period that can overlap with the broadcast. As will be explained below, such time period begins during the broadcast (as the reward ID code is broadcast, received, decoded and stored), and extends beyond it to a time dependent, for example, on the memory capacity of the viewer's PC and the advertiser's wishes. It is contemplated that this extended time period will be no less than one day and no more than 30 days. Thus, the conventional programming signal 5 is encoded by encoder 6 with a reward ID code 7. The term "encoded" is used in the broadest sense to include any and all techniques for combining a programming signal with another signal for broadcasting both together by a well known, commonly used broadcast transmitter 8.

At the viewer end, both signals are received, separated, processed and reproduced. The specific technique chosen depends on various design considerations. The reward ID code can be either analog or digital. The encoding, transmission, detection and decoding of such signals are conventional and readily apparent to anyone with ordinary skill in the art. Such specifics do not form a part of the present invention. Details thereof would add unnecessarily to the length and complexity of this description. Consequently, such details are not provided herein.

In accordance with a key aspect of the present invention, the reward ID code 7 deliberately does not include all of the data specific to the particular reward coupon that is required to display and/or print it, such as, for example, the text, font, formatting, symbols, background color, font color, and the like. It has been found difficult to transmit all of this information as part of a broadcast signal because, for example, the portion of the broadcast signal available for the reward data is too small to enable a sufficient transmission rate for the rewards. Thus, if commercials are broadcast one after the other, as often happens, transmission of the reward data for one commercial will not have been completed before the next commercial is being broadcast. In such a case, the reward data for the subsequent commercial cannot be transmitted.

In contrast to the above-described approach, the present invention sends only an identification (ID) code of minimal length. The entire code can be transmitted within a brief time period compared to the duration of a commercial, for example. Such time period can be on the order of a second. Several code transmissions can, thus, be completed even during a short commercial. The code contains the usual header, parity and other bits necessary to identify the bit string as a code and to insure its accurate reception and reproduction. Of course, several bits of the code are the actual ID number assigned to the particular reward. In addition, the reward ID code may contain data related to reward issuance criteria imposed at the advertiser's direction for targeting the reward identified by the code to particular viewers based on, for example, a particular viewer's personal profile (e.g. geographic location, age, ethnic background, income, level of education). The criteria can also impose conditions, such as minimum viewing requirements of a particular program. The reward ID code can also include data effective to generate an indicator output signal to create a visual, audible or sensory signal, in a suitable device, to alert the viewer to the fact that a reward is interactively available during the program to which the viewer is then tuned. Inserting all of this information into the reward ID code requires a relatively short code length, particularly when considered relative to the amount of data needed to display and/or print the entire reward coupon.

Broadcast output signal 2 is received by program reproduction apparatus 3. In particular, receiver 11 processes the received programming signal 5 and inputs it, as signal 5A, to reproduction device 13. Thus, if apparatus 3 is a TV set, receiver 11 could be a tuner, and device 13 is the TV screen. Receiver 11 can include circuitry to extract the programming signal and/or the reward ID code from signal 2. Such circuitry is well known, and thus details thereof are not needed herein.

The reward ID code 7 is provided, as signal 2A, to decoder 15. Alternatively, signal 2 can be inputted directly to decoder 15.

Apparatus 3 is a conventional component of a commercially available video and/or audio instrument, such as a TV set. Decoder 15 could be embodied as a separate box that houses all of its components. Such a separate box could be coupled directly to the TV's audio circuitry, via a plug for example, or such box could have a microphone to pick jup the acoustic signal from the TV's speakers, which includes the reward ID code. Only minimal retrofitting of the TV, for example, would be required in order to implement the invention, such as connecting the broadcast receiver 11 (e.g. TV tuner) to the decoder 15. The connection to the TV set could be with a direct line or by remote signal transmission (e.g. RF, infrared). Other than that, the installation of the box housing apparatus 15 is very simple in that it just needs to be plugged into a wall outlet socket to receive power. Only a one time, fast, simple installation is involved that requires no retrofit of other apparatus in the house.

Alternatively, decoder 15 could have its circuitry incorporated into the electronics of the TV. For example, the electronics could be fabricated on the semiconductor chip used to control operation of a TV and the viewing of programs on it. Such TV chips are becoming increasingly sophisticated with modern TVs being provided with added functionality approaching that of a computer. The cost of adding such circuitry to a TV chip is minimal considering the large number of chips over which the cost would be spread.

The decoder separates the reward ID code from the programming signal. It is contemplated that each participating viewer will have a personal computer ("PC") readily available for use in connection with the present invention. Fig. 1 shows a viewer's PC 10. As is well known, such a PC includes interface devices such as a keyboard and mouse, a display screen, suitable semiconductor devices such as microprocessors and memory devices, storage media, communication ports, and all the other various, well known units that are common to this apparatus. For purposes of this invention, Fig. 1 shows the viewer's PC 10 as having a memory unit 20 and a reader 22 for use with a portable memory device, such as a smart card or a flash card. The output of reader 22 is coupled within viewer's PC 10 to the output of memory unit 20 so that information obtained by reader 22 is stored in memory unit 20. Of course, reader 22 can also be a unit separate from the PC 10 but coupled to a USB port, for example.

The viewer's PC 10 is configured to be in communication with the Internet. Connection 24 can be any one of the various well known types of connections commonly used for this purpose. In this way, the viewer's PC 10 can communicate in a well known manner with any apparatus coupled to the Internet.

Also coupled to the Internet in connection with this invention is website service center 30. The significance of website service center 30 to the present invention and the details of its operation are described below. Furthermore, the advertiser's PC 32 is also coupled to the Internet to enable communication with website service center 30, as explained in detail below.

Decoder 15 can be in direct connection with memory unit 20 of the viewer's PC 10, as shown by wire 21. Likewise, such communication can occur via a wireless connection, such as WiFi or Bluetooth, as represented by broken line 21a. Alternatively, the decoder 15 can communicate with a memory unit 26 which includes a portable memory device 28, such as the above-mentioned smartcard or flash card that is compatible with reader 22. The communication between the decoder 15 and the memory unit 26 can also be via wire or by wireless communication, as represented by 27 and 27a, respectively. It must also be noted that future models of TV's may have a built-in PC, in which case all of the functions ascribed herein to a PC will, in effect, be performed by such a TV.

In any case, the reward ID codes in broadcast signal 2, which have been received by apparatus 3 and then decoded, are all stored in memory unit 20 of the PC 10. Such reward ID codes arrive at memory unit 20 directly from the decoder 15 or from a portable memory device 28 which has been manually transferred from memory unit 26 to the reader 22.

The reward ID codes are all stored in memory unit 20 automatically, namely upon arrival at apparatus 3, and completely without any intervention from the viewer (other than when device 28 is utilized). Each received reward ID code is time-stamped in accordance with the time outputted by timer 35. When the viewer desires to see what rewards he has available for retrieval, and perhaps to then retrieve a particular reward, he accesses a menu which has available a suitable command designed for this purpose. When that command is activated, the viewer's PC 10 establishes a communication via the Internet with website service center 30. The viewer's PC 10 is specifically configured so that this command specifies a URL that accesses the appropriate web page at this website with a minimal amount of navigation, and preferably none. The reward ID codes stored in the viewer's PC 10 are uploaded to the website service center 30 when the connection is made. The website service center converts each reward ID code, as explained below, to reward display and/or print data which has three possible versions. Firstly, it has a short, human readable "list" version for inclusion in a descriptive list along with analogous texts for the other stored ID codes. The second, "full" version contains the reward and perhaps other information considered to be of benefit in connection therewith. Such other information can be, for example, pictures of an automobile and/or its performance specifications for a car commercial, biographies of the actors/actresses for a movie commercial, recipes for a food commercial, and so on. Finally, the "print" version is needed to actually print the reward.

Thus, to briefly summarize the invention up to this point, a relatively short reward ID code used only for identification and targeting purposes is combined with a programming signal and transmitted by the broadcast transmitter 8. At the receiving end, each reward ID code 7 is decoded, time-stamped and automatically stored in the viewer's PC 10. All such received codes can be stored without the necessity for viewer intervention.

The viewer can access the stored rewards by establishing communication with the website service center via the Internet. When such communication is established, each of the stored codes is converted by the website service center to a "list" version of the reward ID code for the purpose of being descriptively listed with all the other codes so as to enable the viewer to select one. If a reward on the list is picked, the "full" version is provided for display and/or printing of the selected reward.

An important advantage of the invention, as described up to this point, is that in contrast to known techniques, the convenience to the viewer is maximized by eliminating the need for tedious navigation in order to access the full reward data stored in the website service center. The conversion is done easily, quickly and conveniently by configuring the viewer's PC 10 with a particular URL so that it accesses immediately and directly the appropriate web page at the website service center.

The advertiser, whose PC 32 is shown in Fig. 1 as coupled to the Internet in connection with the present invention, also gains significant advantages made available by the present invention because of the capabilities that it provides in, for example, maximizing flexibility to modify the rewards quickly and also enabling customization by targeting the rewards to a particular audience. More specifically, since the programming signal is combined with an identification code rather than an entire database for a specific reward, it is very convenient to quickly and simply change the reward without having to re-encode the programming signal. Thus, the advertiser need only send to the website service center a revised set of full reward data for a particular set of reward ID codes. This can be quickly and readily accomplished. Also, the advertiser provides a brief, attention getting and/or informative text related to the product and/or the reward being offered. This brief text is designed to be included in the listing of all of the reward ID codes that are made available to the viewer to enable the selection of a particular reward. This text can be changed frequently and/or different versions can be provided to different viewers, as explained below.

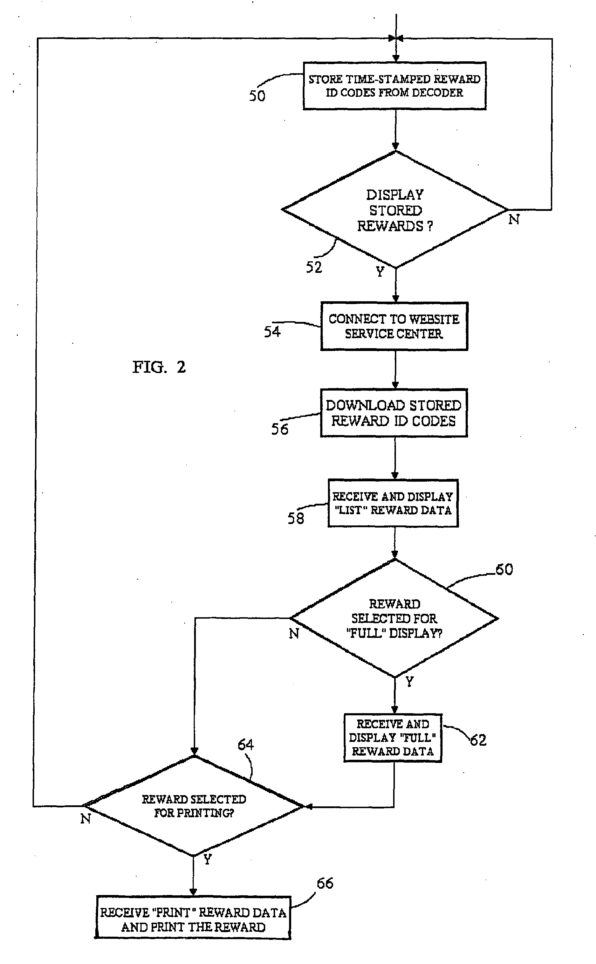

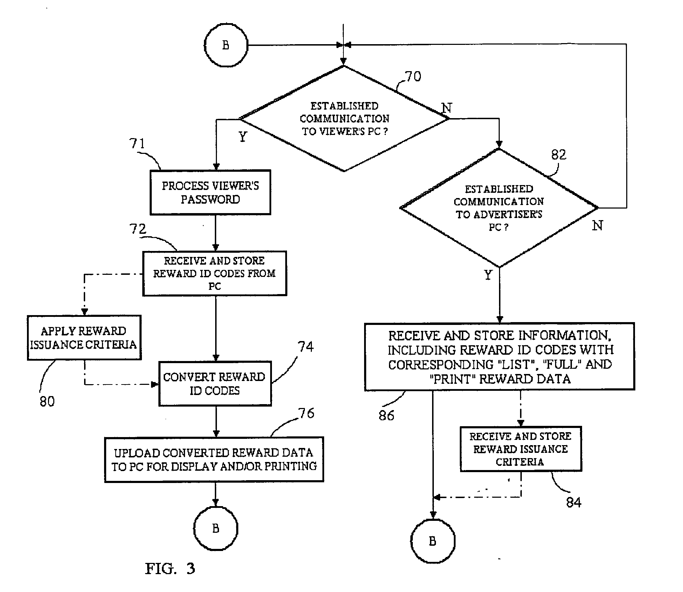

Further details of the invention will be understood in connection with the following discussion of Figs. 2 and 3. Fig. 2 shows the processing steps performed by the viewer's PC 10. In particular, step 50 depicts that the decoded reward ID codes are stored in the viewer's PC 10. As explained above, such codes are obtained by wire or wireless connections from the decoder and/or the portable memory device 28 which is manually brought to the viewer's PC 10 from memory unit 26. All such codes are stored automatically as they are received by the PC 10. Each code, as it is received, is time-stamped, and that time stamp is stored together with the code. When the viewer desires to access information about the reward ID codes that have been automatically stored in the PC 10, a menu-driven command designed for this purpose is actuated by the viewer and received by the PC 10, as per step 52. The PC 10 then creates a connection via the Internet to the service center website, as per 54, and downloads a control signal, which includes the stored ID codes, to the website service center, as per 56. After suitable processing at the website service center 30, the PC 10 receives, per 58, display data for displaying information, usually in text form, provided by the advertiser(s), as explained below. The "list" version of the reward data provides a brief description of the product, such as its brand name, and of the reward being offered, such as a discount coupon for "10% off" or "two for one". The viewer can then choose any reward from among those that are listed. If a selection signal is transmitted to PC 10 indicating that a reward has been selected to obtain further information, as per 60, the "full" version of the reward data will be displayed on the PC 10, per 62. Such "full" version can provide information about the product, its use and so on, or it can provide more information about the reward. In contrast to known approaches which provide only a "naked" discount coupon, this invention makes it possible to enhance the commercial impression made by the product with this accompanying information, and provides a valuable tool to capture and maintain viewer interest in the programming and/or the advertised products. If the viewer wishes to print the reward, as determined per 64, the "print" version of the reward data is transmitted to the viewer's PC 10, and the reward is printed, per 66, on printer 33 (Fig 1). The printing can be triggered by the selection signal or by a special print request signal, based on design choice.

Fig. 3 depicts the processing steps performed by the website service center 30. In particular, the website service center determines per 70 whether a suitable communication connection has been established with the viewer's PC 10. If it has, then the website service center 30 proceeds to receive, store, process and display the reward ID codes and the reward data corresponding thereto. As pointed out above, minimal navigation by the user, and preferably none, is required.

More specifically, the website service center 30 receives and stores the time-stamped reward ID codes, per 72. These are processed by converting each ID code to the different versions of the reward data per the conversion information provided by the advertiser. Thus, each reward ID code is connected to a "list" version of the reward ID code for use in the above-mentioned listing, and also to the "full" version for use in providing additional supplemental information. Finally, each ID code is also converted to the "print" version for actually printing the reward when this is selected by the viewer. No details of the conversion are provided herein because it is deemed to be well known to anyone with ordinary skill in this art. Such conversion to all the available versions is represented in Fig. 3 by 74. The uploading of the converted reward data to the viewer's PC 10 is for display and/or printing, as represented by 76.

As an added feature of the invention, advertisers can target the rewards to particular audiences. Thus, reward issuance criteria are checked, per 80, based for example on the viewer's password, which was processed by the website service center 30 per 71, and the criteria imposed by the advertiser. When the viewer accesses website service center 30, the viewer's password must be entered. In a pre-stored viewer's database, that password is associated with relevant profile information pertaining to that viewer, such as geographic location, age, ethnic background, income, education, and so on. The advertiser may specify different reward data depending on the viewer's profile. In fact, even whether or not a reward is available to a particular viewer may also depend on the profile. Thus, certain rewards may be suitable for a teenager, but not of interest to a senior citizen. Or, some rewards may be of interest to someone in a warm climate but not to someone in a cold climate. Myriad examples of targeting viewers based on such criteria can readily be thought of. Such criteria are stored in the website service center 30, as explained below. When the reward ID codes are about to be processed, step 80 applies the reward issuance criteria. Step 74 then carries out the conversion based on those criteria. Broken input/output lines are used in connection with step 80 as an indication that it is an optional feature.

Fig. 3 also shows that website service center 30 determines, per 82, whether it is in communication with advertiser PC 32. Such communication can be initiated by the website service center as part of its arrangement with the advertiser in order to obtain needed information to implement the invention. Thus, it is contemplated, for example, that the website service center 30 will elicit information from the advertiser, perhaps via the Internet, that includes a description of the commercial, time for the first run and the reward being offered to the viewers. The advertiser can also transmit an audio file of the program which the website service center 30 will encode with the reward ID codes assigned to the reward(s) offered by the advertiser. The advertiser will also provide the reward data for the versions of the reward discussed above. All such information is represented in Fig. 3 by 86. Furthermore, the reward issuance criteria can also be provided, per 84. As with step 80, broken input/output lines are used in connection with step 84 as an indication that it is an optional feature.

The communication between the advertiser PC 32 and the website service center 30 can also be initiated by the advertiser when it is desired to change the reward associated with any particular reward ID code. It is not necessary to modify the encoded broadcast signal. Instead, the advertiser merely transmits to website service center 30 replacement reward data pertaining to a specified reward ID code with which the programming signal 5 is already encoded. Likewise, the reward issuance criteria can also be changed at will by the advertiser. Such changes can be implemented efficiently, conveniently and expeditiously in accordance with the present invention.

Rather than using a PC to access rewards and/or obtain information regarding various advertised products corresponding to the rewards, a designated kiosk 36 may be employed by the smartcard user, as shown in Fig. 1. The operation of such kiosks is well known. Consequently, such details are not provided herein. The kiosk can be located, for example, at various retail stores establishments and will have access via the Internet to the rewards database in the website service center 30 discussed above. The rewards database will contain a list of rewards available for redemption at the particular retail store. To access the rewards, a viewer's smartcard can be inserted into a designated slot (not shown) on the kiosk, whereupon a viewer can then select from among the various available rewards listed on the smartcard and obtain access to a reward which can then be printed out by a local printer 38 connected to or integral with the kiosk.

Thus, while there have been shown and described various features of the invention as applied to a preferred embodiment thereof, it will be understood that various omissions and substitutions and changes in the form and details of the devices illustrated, and in their operation, could be readily made by those ordinarily skilled in the art without departing from the spirit of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method for enabling access to supplementary materials related to a program that is broadcast to a plurality of audience members, comprising:
obtaining a programming signal to be used for performing the program;
obtaining a supplementary material ID signal that uniquely identifies particular program-related supplementary material from among a plurality of available program-related supplementary materials, but which does not include sufficient data for printing and/or displaying such particular program-related supplementary material;
combining said programming signal and said supplementary material ID signal into an output signal;
broadcasting said output signal from a broadcast signal source;
at a location of each audience member, receiving said broadcast output signal, separating from said received broadcast output signal said programming signal and said supplementary material ID signal, performing the program with said separated programming signal on reproduction equipment, storing said separated supplementary material ID signals received at said location during an interval of time, and generating a control signal, related to said stored supplementary material ID signals, upon actuation by the audience member at such location; and
at a location remote from each of said audience members, providing a database that stores data for printing and/or displaying information related to the plurality of available program-related supplementary materials, receiving said control signal, responding to said received control signal by retrieving from said database stored data for printing and/or displaying information related to the stored program-related supplementary material respectively corresponding to said supplementary material ID signals, and transmitting said retrieved data to the location from which said control signal was sent.

2. The method of claim 1, further comprising receiving the retrieved data at said location from which said control signal was sent, and displaying a brief description of the supplementary material associated with each different supplementary material ID signal stored at said location during said time interval.

3. The method of claim 2, further comprising generating at said location from which said control signal was sent a selection signal corresponding to the particular supplementary material selected by said audience member after viewing said brief description of the supplementary material associated with each different supplementary material ID signal stored at said location during said time interval, and transmitting said selection signal to said remote location.

4. The method of claim 3, further comprising receiving the selection signal at the remote location and responding thereto by retrieving additional data related to the particular supplementary material selected by said audience member, and transmitting said additional data to said location.

5. The method of claim 4, further comprising displaying at said location information related to the particular supplementary material selected by said audience member and corresponding to said additional data received from said remote location.

6. The method of claim 5, wherein said information related to the particular supplementary material selected by said audience member and displayed at said location is the particular supplementary material.

7. The method of claim 5, further comprising printing at said location information related to the particular supplementary material selected by said audience member based on said additional data received from said remote location.

8. The method of claim 7, wherein said information related to the particular supplementary material selected by said audience member and printed at said location is the particular supplementary material.

9. The method of claim 1, wherein said step of generating a control signal comprises transmitting said control signal to said remote location.

10. The method of claim 9, wherein said step of transmitting said control signal comprises communicating over a global communications network.

11. The method of claim 1, wherein said supplementary material ID signal comprises a code that uniquely identifies particular program-related supplementary material.

12. The method of claim 1, wherein said supplementary material ID signal comprises data representing reward issuance criteria.

13. The method of claim 12, wherein said step of transmitting said retrieved data from the remote location to the location from which said control signal was received is conditional upon said reward issuance criteria being met.

14. The method of claim 1, wherein said supplementary material ID signal comprises data for generating an indicator signal, and further comprising generating an indication perceptible to the audience member when the received broadcast output signal includes a supplementary material ID signal.

15. The method of claim 1, wherein said supplementary material is at least one of supplementary information and an incentive reward coupon, and wherein said supplementary material ID signal is a code for at least one of said supplementary information and said incentive reward coupon.

16. The method of claim 1, wherein said control signal includes said stored supplementary material ID signals.

17. A method to generate a broadcast signal for enabling access to supplementary materials related to a program that is broadcast to a plurality of audience members, comprising:
obtaining a programming signal to be used for performing the program;
obtaining a supplementary material ID signal that uniquely identifies particular program-related supplementary material from among a plurality of available program-related supplementary materials, but which does not include sufficient data for printing and/or displaying such particular program-related supplementary material; combining said programming signal and said supplementary material ID signal into a broadcast signal; and
broadcasting said broadcast signal from a broadcast signal source.

18. The method of claim 17, wherein said supplementary material ID signal comprises a code that uniquely identifies particular program-related supplementary material.

19. The method of claim 17, wherein said supplementary material ID signal comprises data representing reward issuance criteria.

20. The method of claim 17, wherein said supplementary material ID signal comprises data for generating an indicator signal, and further comprising generating an indication perceptible to the audience member when the received broadcast output signal includes a supplementary material ID signal.

21. The method of claim 17, wherein said supplementary material is at least one of supplementary information and an incentive reward coupon, and wherein said supplementary material ID signal is a code for at least one of said supplementary information and said incentive reward coupon.

22. A method to use a broadcast signal for enabling access to supplementary materials related to a program that is broadcast from a program signal source to a plurality of audience members, wherein the broadcast signal is a combination of (i) a programming signal to be used for performing the program, and (ii) a supplementary material ID signal that uniquely identifies particular program-related supplementary material from among a plurality of available program-related supplementary materials, but which does not include sufficient data for printing and/or displaying such particular program-related supplementary material, said method comprising:
at a location of each audience member, receiving said broadcast output signal, separating from said received broadcast output signal said programming signal and said supplementary material ID signal, performing the program with said separated programming signal on reproduction equipment, storing said separated supplementary material ID signals received at said location during an interval of time, and
generating a control signal, related to said stored supplementary material ID signals, upon actuation by the audience member at such location; and
at a location remote from each of said audience members, providing a database that stores data for printing and/or displaying information related to the plurality of available program-related supplementary materials, receiving said control signal, responding to said received control signal by retrieving from said database stored data for printing and/or displaying information related to the stored program-related supplementary material respectively corresponding to said stored supplementary material ID signals, and transmitting said retrieved data to the location from which said control signal was sent.

23. The method of claim 22, further comprising receiving the retrieved data at said location from which said control signal was sent, and displaying a brief description of the supplementary material associated with each different supplementary material ID signal stored at said location during said time interval.

24. The method of claim 23, further comprising generating at said location from which said control signal was sent a selection signal corresponding to the particular supplementary material selected by said audience member after viewing said brief description of the supplementary material associated with each different supplementary material ID signal stored at said location during said time interval, and transmitting said selection signal to said remote location.

25. The method of claim 24, further comprising receiving the selection signal at the remote location and responding thereto by retrieving additional data related to the particular supplementary material selected by said audience member, and transmitting said additional data to said location.

26. The method of claim 25, further comprising displaying at said location information related to the particular supplementary material selected by said audience member and corresponding to said additional data received from said remote location.

27. The method of claim 26, further comprising printing at said location information related to the particular supplementary material selected by said audience member based on said additional data received from said remote location.

28. The method of claim 22, wherein said step of generating a control signal comprises transmitting said control signal to said remote location.

29. The method of claim 28, wherein said step of transmitting said control signal comprises communicating over a global communications network.

30. The method of claim 22, wherein said supplementary material ID signal comprises a code that uniquely identifies particular program-related supplementary material.

31. The method of claim 22, wherein said supplementary material ID signal comprises data representing reward issuance criteria.

32. The method of claim 31, wherein said step of transmitting said retrieved data from the remote location to the location from which said control signal was received is conditional upon said reward issuance criteria being met.

33. The method of claim 22, wherein said supplementary material ID signal comprises data for generating an indicator signal, and further comprising generating an indication perceptible to the audience member when the received broadcast output signal includes a supplementary material ID signal.

34. The method of claim 22, wherein said supplementary material is at least one of supplementary information and an incentive reward coupon, and wherein said supplementary material ID signal is a code for at least one of said supplementary information and said incentive reward coupon.

35. A method for enabling access to supplementary materials related to a broadcast signal that is broadcast from a signal source to a plurality of audience members at respective locations, wherein the broadcast signal is a combination of (i) a programming signal to be used for performing a program, and (ii) a supplementary material ID signal that uniquely identifies particular program-related supplementary material from among a plurality of available program-related supplementary materials, but which does not include sufficient data for printing and/or displaying such particular program-related supplementary material, said method comprising:
providing a database that stores data for printing and/or displaying information related to a plurality of program-related supplementary materials such that said materials are respectively associated with unique supplementary material ID signals;
receiving a control signal actuated by one of said audience members, said control signal being related to supplementary material ID signals detected at said location during an interval of time;
responding to said received control signal by retrieving from said database stored data for printing and/or displaying said information related to the stored program-related supplementary material respectively corresponding to said detected supplementary material ID signals, and transmitting said retrieved data to the location from which said control signal was sent.

36. The method of claim 35, wherein communication between said audience member's location and said database comprises communicating over a global communication network.

37. The method of claim 35, wherein said step of transmitting said retrieved data from the remote location to the location from which said control signal was received is conditional upon specified reward issuance criteria being met.

38. The method of claim 35, wherein said stored data for printing and/or displaying information related to a plurality of program-related supplementary materials further comprises data for displaying a brief description of the supplementary material corresponding to each different detected supplementary material ID signal.

39. The method of claim 38, wherein said stored data for printing and/or displaying information related to a plurality of program-related supplementary materials further comprises additional data for displaying more complete information than said brief description of the supplementary material corresponding to each different detected supplementary material ID signal.

40. The method of claim 39, wherein said additional data is for displaying said supplementary material corresponding to each different detected supplementary material ID signal.

41. The method of claim 39, wherein said additional data is for printing said supplementary material corresponding to each different detected supplementary material ID signal.

42. An apparatus for enabling access to supplementary materials related to a program that is broadcast to a plurality of audience members, comprising:
means for obtaining a programming signal to be used for performing the program;
means for obtaining a supplementary material ID signal that uniquely identifies particular program-related supplementary material from among a plurality of available program-related supplementary materials, but which does not include sufficient data for printing and/or displaying such particular program-related supplementary material;
means for combining said programming signal and said supplementary material ID signal into an output signal;
means for broadcasting said output signal from a broadcast signal source;
at a location of each audience member, means for receiving said broadcast output signal, separating from said received broadcast output signal said programming signal and said supplementary material ID signal, performing the program with said separated programming signal on reproduction equipment, storing said separated supplementary material ID signals received at said location during an interval of time, and generating a control signal, related to said stored supplementary material ID signals, upon actuation by the audience member at such location; and
at a location remote from each of said audience members, means for providing a database that stores data for printing and/or displaying information related to the plurality of available program-related supplementary materials, receiving said control signal, responding to said received control signal by retrieving from said database stored data for printing and/or displaying information related to the stored program-related supplementary material respectively corresponding to said supplementary material ID signals, and transmitting said retrieved data to the location from which said control signal was sent.

43. An apparatus to generate a broadcast signal for enabling access to supplementary materials related to a program that is broadcast to a plurality of audience members, comprising:
means for obtaining a programming signal to be used for performing the program;
means for obtaining a supplementary material ID signal that uniquely identifies particular program-related supplementary material from among a plurality of available program-related supplementary materials, but which does not include sufficient data for printing and/or displaying such particular program-related supplementary material;
means for combining said programming signal and said supplementary material ID signal into a broadcast signal; and
means for broadcasting said broadcast signal from a broadcast signal source.

44. An apparatus to use a broadcast signal for enabling access to supplementary materials related to a program that is broadcast from a program signal source to a plurality of audience members, wherein the broadcast signal is a combination of (i) a programming signal to be used for performing the program, and (ii) a supplementary material ID signal that uniquely identifies particular program-related supplementary material from among a plurality of available program-related supplementary materials, but which does not include sufficient data for printing and/or displaying such particular program-related supplementary material, said apparatus comprising:
at a location of each audience member, means for receiving said broadcast output signal, separating from said received broadcast output signal said programming signal and said supplementary material ID signal, performing the program with said separated programming signal on reproduction equipment, storing said separated supplementary material ID signals received at said location during an interval of time, and
generating a control signal, related to said stored supplementary material ID signals, upon actuation by the audience member at such location; and
at a location remote from each of said audience members, means for providing a database that stores data for printing and/or displaying information related to the plurality of available program-related supplementary materials, receiving said control signal, responding to said received control signal by retrieving from said database stored data for printing and/or displaying information related to the stored program-related supplementary material respectively corresponding to said stored supplementary material ID signals, and transmitting said retrieved data to the location from which said control signal was sent.

45. An apparatus for enabling access to supplementary materials related to a broadcast signal that is broadcast from a signal source to a plurality of audience members at respective locations, wherein the broadcast signal is a combination of (i) a programming signal to be used for performing a program, and (ii) a supplementary material ID signal that uniquely identifies particular program-related supplementary material from among a plurality of available program-related supplementary materials, but which does not include sufficient data for printing and/or displaying such particular program-related supplementary material, said apparatus comprising:
means for providing a database that stores data for printing and/or displaying information related to a plurality of program-related supplementary materials such that said materials are respectively associated with unique supplementary material ID signals;
means for receiving a control signal actuated by one of said audience members, said control signal being related to supplementary material ID signals detected at said location during an interval of time;
means for responding to said received control signal by retrieving from said database stored data for printing and/or displaying said information related to the stored program-related supplementary material respectively corresponding to said detected supplementary material ID signals, and transmitting said retrieved data to the location from which said control signal was sent.

46. A method for obtaining access supplementary materials related to a program that is broadcast to a plurality of audience members, comprising:
receiving said broadcast output signal,
separating from said received broadcast output signal a programming signal and a supplementary material ID signal, storing said separated supplementary material ID signals received at said location during an interval of time, and
generating a control signal, related to said stored supplementary material ID signals, upon actuation by the audience member at such location; and
printing and/or displaying information related to the stored program-related supplementary material respectively corresponding to said supplementary material ID signals on responding to said received control signal by retrieving stored data from a database
